# EUROPEAN PATENT APPLICATION

(11) **EP 4 693 572 A1**
(43) Date of publication of application: **11.02.2026**
(21) Application number: 23943458.2
(22) Date of filing: 22.12.2023
(51) Int. Cl.: H01M 10/058

(54) **SODIUM ION BATTERY AND ELECTRIC DEVICE**

(30) Priority: 27.06.2023 CN 202310771185
(71) Applicant: Sunwoda Mobility Energy Technology Co., Ltd., Shenzhen, Guangdong 518107 (CN)
(72) Inventor: ZHU, Chenjing, Shenzhen, Guangdong 518107 (CN); AN, Li, Shenzhen, Guangdong 518107 (CN); DENG, Changjian, Shenzhen, Guangdong 518107 (CN); LIANG, Shishuo, Shenzhen, Guangdong 518107 (CN)
(74) Representative: Boult Wade Tennant LLP
(86) International application number: PCT/CN2023/141192
(87) International publication number: WO 2025/000986

(57) **Abstract**

The present disclosure discloses a sodium-ion battery and an electric device. The sodium-ion battery includes a positive electrode plate, and the positive electrode plate includes a positive electrode current collector, a first positive electrode material layer disposed on at least one surface of the positive electrode current collector, and a second positive electrode material layer disposed on the first positive electrode material layer; the first positive electrode material layer includes a first positive electrode material, and the first positive electrode material includes a tunnel-type oxide; and the second positive electrode material layer includes a second positive electrode material, and the second positive electrode material includes a P2 and/or O3 type layered oxide.

## Description

This application claims the priority of Chinese patent Application No. 202310771185.5, submitted to the Chinese Patent Office on June 27, 2023, and entitled "SODIUM-ION BATTERY AND ELECTRIC DEVICE", which is incorporated herein by reference in its entirety.

### FIELD

The present disclosure relates to the technical field of battery manufacturing, and in particular to a sodium-ion battery and an electric device.

### BACKGROUND

With the development of new energy technologies, energy storage batteries are developing rapidly. Sodium, due to its abundant crustal reserves, widespread distribution, low price, and the ability to leverage existing lithium battery processing conditions, makes sodium-ion batteries highly promising for application. Tunnel-type oxide materials offer advantages such as abundant raw materials, simple synthesis methods, non-toxicity and environmental friendliness, stability to water and oxygen, high structural stability, and high ionic conductivity, and may be used as positive electrode materials for sodium-ion batteries.

However, when tunnel-type oxide materials are used as the positive electrode materials of batteries, due to the low sodium content of the tunnel-type oxide materials, the sodium ions that may be deintercalated during the first cycle of charging of the batteries are limited, resulting in extremely low charge and discharge capacity of the batteries, which seriously restricts the practical application of tunnel-type oxide materials in sodium-ion batteries.

### SUMMARY

Embodiments of the present disclosure provide a sodium-ion battery and an electric device to solve the problem in the related art that when tunnel-type oxide materials are used as the positive electrode materials of the batteries, the sodium ions that may be deintercalated during the first cycle of charging of the batteries are limited, resulting in extremely low charge and discharge capacity of the batteries, which seriously restricts the practical application of tunnel-type oxide materials in sodium-ion batteries.

In order to solve the above technical problems, the present disclosure is implemented as follows:
In a first aspect, an embodiment of the present disclosure provides a sodium-ion battery, including a positive electrode plate, the positive electrode plate including: a positive electrode current collector, a first positive electrode material layer disposed on at least one surface of the positive electrode current collector, and a second positive electrode material layer disposed on the first positive electrode material layer;
the first positive electrode material layer includes a first positive electrode material, and the first positive electrode material includes a tunnel-type oxide;
the second positive electrode material layer includes a second positive electrode material, and the second positive electrode material includes a P2 and/or O3 type layered oxide.

Optionally, the molecular formula of the layered oxide includes NaₓTMO₂, where TM includes at least one of Ni, Mn, Fe, Ti, Co, Cu, and Zn, and the x satisfies: 0.6<x<1.

Optionally, the thickness of the first positive electrode material layer is H₁, the thickness of the second positive electrode material layer is H₂, and the H₁ and H₂ satisfy: 0.05≤H₂/H₁≤0.2

Optionally, the H₁ satisfies: 50 µm≤H₁≤100 µm.

Optionally, the H₂ satisfies: 2.5 µm≤H₂≤20 µm.

Optionally, the tunnel-type oxide includes sodium element and manganese element, and the molar ratio of the sodium element to the manganese element is 0.2 to 0.44.

Optionally, the tunnel-type oxide includes at least one of Na_{0.2}MnO₂, Na_{0.40}MnO₂, and Na_{0.44}MnO₂.

Optionally, the compaction density of the positive electrode plate is K, and the K satisfies: 2 mg/cm³≤K≤3 mg/cm³.

Optionally, the volume median particle size of the layered oxide is Dv50, and the Dv50 satisfies: 3 µm≤Dv50≤15 µm.

In a second aspect, an embodiment of the present disclosure provides an electric device, which includes the sodium-ion battery described in the first aspect above.

In the embodiments of the present disclosure, a sodium-ion battery includes a positive electrode plate, where the positive electrode plate includes: a positive electrode current collector, a first positive electrode material layer disposed on at least one surface of the positive electrode current collector, and a second positive electrode material layer disposed on the first positive electrode material layer. The first positive electrode material layer and the second positive electrode material layer may be supported by the current collector, and the current collector layer may also serve as a carrier for electron collection and conduction in the positive electrode plate, thereby realizing the process of converting chemical energy into electrical energy. The first positive electrode material layer includes a first positive electrode material, and the second positive electrode material layer includes a second material, that is, the second positive electrode material is disposed on the first positive electrode material. Since the first positive electrode material includes a tunnel-type oxide and the second positive electrode material includes a P2 and/or O3 type layered oxide, the P2 and/or O3 type layered oxide and the tunnel-type oxide are stacked on at least one surface of the current collector to form a positive electrode plate. Both the tunnel-type oxide and the layered oxide may provide sodium ions during charging. Since the sodium content of the layered oxide is relatively high, the arrangement of the layered oxide may enable the positive electrode plate to have more sodium ions that may be deintercalated.

That is, in the sodium-ion battery provided in the embodiments of the present disclosure, since the positive electrode plate also includes a second positive electrode material layer including a second positive electrode material, when the sodium-ion battery is charged for the first cycle, in addition to the first positive electrode material layer, the second positive electrode material layer may also provide additional sodium ions, so that there are more sodium ions that may be deintercalated in the sodium-ion battery, thereby enabling the sodium-ion battery to have a higher discharge capacity, thereby achieving an improvement in the charge and discharge capacity of the sodium-ion battery when a tunnel-type oxide is used as the positive electrode material.

The above description is only an overview of the technical solution of the present disclosure. In order to more clearly understand the technical means of the present disclosure, it may be implemented in accordance with the contents of the specification. In order to make the above and other purposes, features and advantages of the present disclosure more obvious and easier to understand, the specific embodiments of the present disclosure are listed below.

### BRIEF DESCRIPTION OF THE DRAWINGS

In order to more clearly illustrate the embodiments of the present disclosure or the technical solutions in the prior art, a brief introduction will be given below to the drawings required for use in the embodiments or the description of the prior art. Apparently, the drawings described below are some embodiments of the present disclosure. For those skilled in the art, other drawings may be obtained according to these drawings without any creative work.

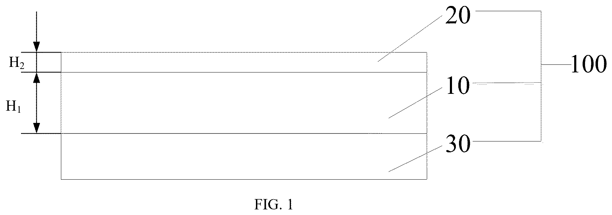

FIG. 1 is a schematic structural diagram of a positive electrode plate provided in an embodiment of the present disclosure.

### Description of Reference Symbols:

100: positive electrode plate; 10: first positive electrode material layer; 20: second positive electrode material layer; 30: positive electrode current collector.

### DETAILED DESCRIPTION OF THE EMBODIMENTS

To make the object, technical solutions, and advantages of the embodiments of this application more clear, the technical solutions in the embodiments of this application will be clearly and completely described below in conjunction with the drawings in the embodiments of this application. Apparently, the described embodiments are part of the embodiments of this application, not all of the embodiments. Based on the embodiments in this application, all other embodiments obtained by those skilled in the art without making creative efforts are within the scope claimed by this application.

As shown in FIG. 1, a sodium-ion battery includes a positive electrode plate 100, which includes: a positive electrode current collector 30, a first positive electrode material layer 10 disposed on at least one surface of the positive electrode current collector 30, and a second positive electrode material layer 20 disposed on the first positive electrode material layer 10; the first positive electrode material layer 10 includes a first positive electrode material, and the first positive electrode material includes a tunnel-type oxide; the second positive electrode material layer 20 includes a second positive electrode material, and the second positive electrode material includes a P2 and/or O3 type layered oxide.

In the embodiments of the present disclosure, the sodium-ion battery includes a positive electrode plate 100, where the positive electrode plate 100 includes: a positive electrode current collector 30, a first positive electrode material layer 10 disposed on at least one surface of the positive electrode current collector 30, and a second positive electrode material layer 20 disposed on the first positive electrode material layer 10. The first positive electrode material layer 10 and the second positive electrode material layer 20 may be supported by the current collector, and the current collector layer may also serve as a carrier for electron collection and conduction in the positive electrode plate 100, thereby realizing the process of converting chemical energy into electrical energy. The first positive electrode material layer 10 includes a first positive electrode material, and the second positive electrode material layer 20 includes a second positive electrode material, that is, the second positive electrode material is disposed on the first positive electrode material. Since the first positive electrode material includes a tunnel-type oxide and the second positive electrode material includes a P2 and/or O3 type layered oxide, the P2 and/or O3 type layered oxide and the tunnel-type oxide are stacked on at least one surface of the current collector to form the positive electrode plate 100. Both the tunnel-type oxide and the layered oxide may provide sodium ions during charging. Since the sodium content of the P2 and/or O3 type layered oxides is relatively high, the provision of the P2 and/or O3 type layered oxides may enable the positive electrode plate 100 to have more sodium ions that may be deintercalated.

That is, in the sodium-ion battery provided in the embodiments of the present disclosure, since the positive electrode plate 100 also includes the second positive electrode material layer 20 including the second positive electrode material, when the sodium-ion battery is charged for the first cycle, in addition to the first positive electrode material layer 10, the second positive electrode material layer 20 may also provide additional sodium ions, so that more sodium ions may be deintercalated in the sodium-ion battery, thereby enabling the sodium-ion battery to have a higher discharge capacity, thereby achieving an improvement in the charge and discharge capacity of the sodium-ion battery when the tunnel-type oxide is used as the positive electrode material.

The electrochemical performance of sodium-ion batteries depends primarily on the structure and properties of the electrode materials. It is generally believed that the properties of the positive electrode material (such as specific capacity, voltage, and cyclability) are key factors affecting the energy density, safety, and cycle life of sodium-ion batteries. Currently studied positive electrode materials for sodium-ion batteries primarily include transition metal oxides, Prussian blue compounds, and polyanionic compounds, etc. Transition metal oxides may be divided into tunnel-type oxides and layered oxides. When the sodium content is high, a layered structure is generally dominant, consisting primarily of stacked transition metal layers arranged side-by-side, with sodium ions located between the layers, forming an alternating arranged layered structure. When the sodium content in the oxide is low, oxides with three-dimensional tunnel structures are dominant, where tunnel-type oxides have tunnels. Therefore, layered oxides have higher sodium content than tunnel-type oxides, providing more sodium ions that may be deintercalated into the negative electrode. During discharge, the unique tunnel structure of the tunnel-type oxide may accommodate additional sodium ions, thereby preventing excessive sodium ions from intercalating into the second positive electrode material layer 20 and disrupting its structural stability, thus preventing the poor stability of the layered oxide from affecting the operation of the sodium-ion battery.

The positive electrode current collector 30 has two opposite surfaces, and the first positive electrode material layer 10 is disposed on at least one surface of the positive electrode current collector 30. The first positive electrode material layer 10 may be disposed on one of the two opposite surfaces of the positive electrode current collector 30, or the first positive electrode material layer 10 may be disposed on both surfaces of the positive electrode current collector 30. When the first positive electrode material layer 10 is disposed on both surfaces of the positive electrode current collector 30, the second positive electrode material layer 20 may be disposed on the first positive electrode material layer 10 on one of the surfaces, or on the first positive electrode material layer 10 on both surfaces.

It should be noted that the second positive electrode material includes a P2 and/or O3 type layered oxide. Specifically, the second positive electrode material may include a P2 type layered oxide (or may be referred to as a P2 phase layered oxide), the P2 type layered oxide includes a large amount of Na+ vacancies and a relatively low Na+ diffusion barrier, and generally exhibits better kinetic performance; or the second positive electrode material may may be an O3 type layered oxide (or may be referred to as an O3 phase layered oxide), the O3 type layered oxide has higher sodium content and may provide a higher charge and discharge capacity; or further, the second positive electrode material may include two layered oxides, a P2 type layered oxide and an O3 type layered oxide, at this time, the second positive electrode material may include a P2/O3 biphasic layered metal oxide (or may be referred to as a P2/O3 mixed-phase layered oxide, a P2/O3 composite-phase layered oxide). Compared with single-phase materials, P2/O3 biphasic layered metal oxides may improve the overall performance of the material to some extent. For example, it may improve, to some extent, the problems of the sodium content of P2 phase layered oxides being lower than that of O3 phase layered oxides, and deep desodiation being often accompanied by severe phase transition and structural stability being poor. It may also improve, to some extent, the problem of poor rate performance of the O3 phase layered oxide.

It should also be noted that sodium-ion batteries also follow the deintercalation working principle. Specifically, during the charging process, sodium ions are deintercalated from the positive electrode and intercalated in the negative electrode. The more sodium ions intercalated in the negative electrode, the higher the charging capacity; during discharge, the process is the opposite, the more sodium ions return to the positive electrode, the higher the discharge capacity.

Additionally, in some embodiments, the molecular formula of the layered oxide may include NaₓTMO₂, where TM includes at least one of Ni, Mn, Fe, Ti, Co, Cu, and Zn, and x satisfies: 0.6<x<1.

The molecular formula of the layered oxide includes NaₓTMO₂, where TM is a transition metal including at least one of Ni, Mn, Fe, Ti, Co, Cu, and Zn, and x satisfies: 0.6<x<1. When x satisfies this range, the sodium content in the layered oxide is high, which may provide more sodium ions during charging, thereby improving the charge and discharge capacity of the sodium-ion battery.

TM includes at least one of Ni, Mn, Fe, Ti, Co, Cu, and Zn, that is, TM includes one or more transition metals. When TM is a metal, TM may be one of Ni, Mn, Fe, Ti, Co, Cu, and Zn. In this case, the subscript of TM in the molecular formula is 1. When TM is multiple metals, TM may be multiple of Ni, Mn, Fe, Ti, Co, Cu, and Zn. In this case, the subscript of TM in the molecular formula being 1, which may be understood that the sum of the subscripts of the multiple metals is 1. For example, when TM includes Co and Mn, the subscript of Co may be 0.5, and the subscript of Mn may be 0.5; or the subscript of Co may be 0.33, and the subscript of Mn may be 0.67; when TM includes Co, Mn, and Ti, the subscript of Co is 0.5, the subscript of Mn is 0.33, and the subscript of Ti is 0.17. The specific elements of TM in the molecular formula are not specifically limited in the present embodiment.

It should be noted that for a single-phase layered oxide, when 0.7 < x < 1.0, the layered oxide is an O3 type layered oxide; when 0.44 < x ≤ 0.7, the layered oxide is a P2 type layered oxide with open prismatic channels, thus having high ionic conductivity and high structural stability. In the embodiments of the present disclosure, setting 0.6 < x < 1 may increase the sodium content in the second material layer, avoiding the problem of poor improvement in the charge and discharge performance of the sodium-ion battery due to the low sodium content when the second material includes a single phase of a P2- type layered oxide.

In some embodiments, the tunnel-type oxide includes sodium element and manganese element, and the molar ratio of the sodium element to the manganese element is 0.2 to 0.44. For example, the molar ratio of the sodium element to the manganese element may be 0.2, 0.25, 0.3, 0.35, 0.4, 0.44, or a range consisting of any two of the above values.

In addition, in some embodiments, the tunnel-type oxide may include Na_{0.44}MnO₂. Na_{0.44}MnO₂ has a unique dual-tunnel structure, namely, unique S-shaped and pentagonal tunnels, which facilitate the migration of Na ions. Furthermore, the Na_{0.44}MnO₂ material has good stability and excellent cycling performance. It may well accommodate sodium ions at the layered oxide deintercalation site, preventing excessive sodium ions from intercalating into the surface material and destroying its structural stability, which facilitates maintaining the structural stability of the second positive electrode material. Furthermore, Na_{0.44}MnO₂ does not change its structural characteristics after being coated with NaₓTMO₂ on the surface. In other words, it still has low alkalinity, good environmental stability, and excellent structural stability, and may still maintain the application advantages of low cost, easy processing, and high-rate performance.

It should be noted that tunnel-type oxides include Na_{0.2}MnO₂, Na_{0.40}MnO₂, Na_{0.44}MnO₂, and the like. Compared to Na_{0.40}MnO₂, Na_{0.44}MnO₂ exhibits better air and electrochemical stability due to its higher capacity, better cycle stability, and less structural evolution during charge and discharge, thus may further reduce the cost of sodium-ion batteries and improve the high-rate performance of sodium-ion batteries, and so on. Of course, tunnel-type oxides may also be other structures, such as Na_{0.40}MnO₂, which also has good electrochemical activity and may also be used as the material for the first positive electrode material layer 10. Of course, tunnel-type oxides may also be other structures and have other molecular formulas, and this is not specifically limited in the embodiments of the present disclosure.

In addition, in some embodiments, the Na_{0.44}MnO₂ in the first positive electrode material layer 10 may be in the shape of a nanorod, the length of the Na_{0.44}MnO₂ is L1, the diameter of the Na_{0.44}MnO₂ is D1, L1 satisfies: 2 µm ≤ L1 ≤ 5 µm, and D1 satisfies: 100 nm ≤ D1 ≤ 400 nm; or, the Na_{0.44}MnO₂ in the first positive electrode material layer 10 may be in the shape of a nanoribbon, the length of the Na_{0.44}MnO₂ is L2, the width of the Na_{0.44}MnO₂ is L3, and the thickness of the Na_{0.44}MnO₂ is L4, L2 satisfies: 6 µm ≤ L2 ≤ 10 µm, L3 satisfies: 50 nm ≤ L3 ≤ 200 nm, and L4 satisfies: 20 nm ≤ L4 ≤ 80 nm.

The size of Na_{0.44}MnO₂ will affect the processing difficulty, coating uniformity, electrochemical performance of the sodium-ion battery, etc. of the first positive electrode material layer 10. When Na_{0.44}MnO₂ is too large, when Na_{0.44}MnO₂ is used to prepare the first positive electrode material slurry, the stability of the slurry is relatively poor. When the first positive electrode material is coated on the current collector to form the first positive electrode material layer 10, the consistency of the first positive electrode material layer 10 is also poor, and uneven coating of the current collector may occur, and the film may even be punctured, causing a battery short circuit. When Na_{0.44}MnO₂ is too small, the processing requirements are high, and it is difficult to process, which will increase the production cost. This application provides a range of sizes of Na_{0.44}MnO₂ for both nanorod-shaped and nanoribbon-shaped Na_{0.44}MnO₂, which may make the size of Na_{0.44}MnO₂ appropriate and avoid the problems caused by excessive or insufficient Na_{0.44}MnO₂.

In addition, in some embodiments, as shown in FIG. 1, the thickness of the first positive electrode material layer 10 is H₁, and the thickness of the second positive electrode material layer 20 is H₂. H₁ and H₂ may satisfy: 0.05 ≤ H₂/H₁ ≤ 0.2.

The thickness of the first positive electrode material layer 10 is H₁, and the thickness of the second positive electrode material layer 20 is H₂. H₁ and H₂ satisfy 0.05 ≤ H₂/H₁ ≤ 0.2, that is, the ratio of the thickness of the second positive electrode material layer 20 to the thickness of the first positive electrode material layer 10 is between 0.05 and 0.2. The thickness of the second positive electrode material layer 20 may be set according to the thickness of the first positive electrode material layer 10, or the thickness of the first positive electrode material layer 10 may be set according to the thickness of the second positive electrode material layer 20. When H₁ and H₂ satisfy 0.05 ≤ H₂ /H₁ ≤ 0.2, the second positive electrode material layer 20 may provide more sodium ions, which effectively compensates for the sodium content of the positive electrode plate 100. In addition, the first positive electrode material layer 10 may also accommodate additional sodium ions during discharge, which is beneficial to maintaining the structural stability of the second positive electrode material.

It should be noted that H₂/H₁ may be any value between 0.05 and 0.2 or a range consisting of any two values between 0.05 and 0.2, for example, 0.05, 0.06, 0.09, 0.1, 0.12, 0.15, 0.18, 0.2, 0.1-0.15, etc. The specific value of H₂/H₁ is not specifically limited in the embodiments of the present disclosure.

It should also be noted that the mass of the first positive electrode material layer 10 is M₁, and the mass of the second positive electrode material layer 20 is M₂. M₁ and M₂ may satisfy: 5% ≤ M₂/M₁ ≤ 20 %. When the first positive electrode material layer 10 and the second positive electrode material layer 20 are provided by coating, the mass of the first positive electrode material layer 10 and the second positive electrode material layer 20 may be controlled. The positive electrode plate 100 obtained by coating with this mass ratio may satisfy 0.05 ≤ H₂/H₁ ≤ 0.2, which facilitates the control of the thickness of the first positive electrode material layer 10 and the thickness of the second positive electrode material layer 20.

In addition, in some embodiments, H₁ may satisfy: 50 µm ≤ H₁ ≤ 100 µm.

The thickness H₁ of the first positive electrode material layer 10 may specifically satisfy 50 µm ≤ H₁ ≤ 100 µm, that is, the thickness of the first positive electrode material layer 10 is in the range of 50 µm to 100 µm. Within this range, the capacity of the positive electrode plate 100 may be made larger, while also avoiding affecting the subsequent sheet rolling process, and better ensuring the performance consistency of the battery electrode plate.

It should be noted that H₁ may specifically be 50 µm, 60 µm, 80 µm, 95 µm, 100 µm, or a range consisting of any two values therein. The specific value of H₁ is not specifically limited in the embodiments of the present disclosure.

In this embodiment, the value of H₂ may be determined based on H₁. For example, when H₁ is 100 µm and H₂/H₁ = 0.1, H₂ is 10 µm.

In addition, in some embodiments, H₂ may satisfy: 2.5 µm ≤ H₂ ≤ 20 µm.

The thickness H₂ of the second positive electrode material layer 20 may specifically satisfy 2.5 µm ≤ H₂ ≤ 20 µm, that is, the thickness of the second positive electrode material layer 20 is within the range of 2.5 µm to 20 µm. Within this range, the second positive electrode material layer 20 may provide additional sodium ions that may be deintercalated, thereby improving the charge and discharge capacity of the sodium-ion battery. However, the structure of the second positive electrode material in the second positive electrode material layer is less stable than that of the first positive electrode material. The provision of the second positive electrode material slightly reduces the cycle performance of the produced sodium-ion battery. Since the thickness of the second positive electrode material layer 20 is less than or equal to 20 µm, the sodium-ion battery may also have higher cycle performance, which may meet usage requirements of the battery and avoid a significant reduction in the cycle performance of the sodium-ion battery.

It should be noted that H₂ may specifically be 2.5 µm, 3 µm, 4 µm, 10 µm, 15 µm, 20 µm, or a range consisting of any two values therein. The specific value of H₂ is not specifically limited in the embodiments of the application.

In this embodiment, the value of H₁ may be determined based on H₂. For example, when H₂ is 5 µm and H₂/H₁ = 0.05, H₂ is 100 µm.

In addition, in some embodiments, the surface density of the positive electrode plate 100 is δ, and δ may satisfy: 3 mg/cm² ≤ δ ≤ 10 mg/cm².

Since the lower the surface density of the positive electrode plate 100, the smaller the thickness of the positive electrode plate 100 may be, the movement distance of the sodium ions may be reduced, and the changes caused by the continuous intercalation and deintercalation of sodium ions during charge and discharge on the structure of the positive electrode plate 100 are also smaller, the cycle performance is better, and the capacity retention rate is higher. While the surface density is large, the interface resistance increases, and it is not easy for sodium ions to be deintercalated from the material, which may easily cause polarization and thus easily lead to capacity decay. In the embodiments of the present disclosure, the surface density of the positive electrode plate 100 is δ, and δ satisfies: 3mg/cm² ≤ δ ≤ 10mg/cm², which may make the deintercalation of sodium ions have less influence on the structure of the positive electrode plate 100, so that the cycle performance of the sodium-ion battery is better and the capacity retention rate is higher, and it may also avoid the problem of low capacity of the sodium-ion battery caused by a thin positive electrode plate 100.

It should be noted that the surface density δ of the positive electrode plate 100 may be 3 mg/cm², 4 mg/cm², 6 mg/cm², 6.7 mg/cm², 10 mg/cm², or a range consisting of any two values therein. The specific value of δ is not specifically limited in the embodiments of the application.

In addition, in some embodiments, the compaction density of the positive electrode plate 100 is K, and K may satisfy: 2 mg/cm³ ≤ K ≤ 3 mg/cm³.

The compaction density of the positive electrode plate 100 is K, K satisfies: 2 mg/cm³ ≤ K ≤ 3 mg/cm³. A compaction density within this range increases the number of conductive channels and bridges in the sodium-ion battery, increasing the active area available for reaction, thereby improving the specific capacity of the battery. Furthermore, it prevents structural damage to the active material, which could reduce cycling performance.

It should be noted that the compaction density K of the positive electrode plate 100 may be specifically 2 mg/cm³, 2.2 mg/cm³, 2.4 mg/cm³, 2.6 mg/cm³, 2.8 mg/cm³, 3 mg/cm³, or a range consisting of any two values therein. The specific value of K is not specifically limited in the embodiments of the application.

Where, the compaction density K = δ/(H₁ + H₂), the size of the compaction density is related to δ, H₁, and H₂. When setting the positive electrode plate, these factors may be combined to set.

In addition, in some embodiments, the volume median particle size of the layered oxide is Dv50, and Dv50 may satisfy: 3 µm ≤ Dv50 ≤ 15 µm.

The particle size of the layered oxide in the second positive electrode material layer 20 will affect the processing difficulty, coating uniformity, electrochemical performance, etc. of the second positive electrode material layer 20. For example, large-particle material slurry has low viscosity and good fluidity, while a small particle size may increase the specific surface area of the second positive electrode material, reduce the diffusion path of sodium ions in the battery, and improve the transmission performance of electrons and sodium ions in the positive electrode plate 100. This application sets a reference range for the volume median particle size of the layered oxide, where the volume median particle size is Dv50. Describing the particle size by reference to the Dv50 value is a common way to describe the particle size distribution, where half of the volume of the particles in the layered oxide have a diameter less than the Dv50 value, and half of the volume of the particles have a diameter greater than the Dv50 value. For example, Dv50 = 8 µm means that half of the volume of the particles in the layered oxide in the second positive electrode material have a diameter less than 8 µm, and half of the volume of the particles have a diameter greater than 8 µm.

When Dv50 is within the range of 3 µm ≤ Dv50 ≤ 15 µm, the layered oxide may have a smaller particle size, and the transmission path of sodium ions in the particles of the second positive electrode material is shorter, thereby improving the rate performance of the battery, reducing the positive electrode polarization phenomenon, and improving the capacity retention rate of the battery during the charge and discharge cycle. In addition, it ensures that the particle size of the layered oxide is not too small, which may effectively inhibit the agglomeration between particles in the second positive electrode material, ensure that the positive electrode has high electrochemical performance, and may also avoid the problem of inconvenience in processing caused by the particle size of the layered oxide being too small.

It should be noted that the volume median particle size of the layered oxide is Dv50, which may be 3 µm, 5 µm, 7 µm, 10 µm, 15 µm or a range consisting of any two values therein. The specific value of Dv50 is not specifically limited in the embodiments of the present disclosure.

It should be noted that the sodium-ion battery also includes a negative electrode plate, a separator, and an electrolyte. The positive electrode plate 100, the negative electrode plate, the separator, and the electrolyte may form a sodium-ion battery. The negative electrode plate includes a negative electrode active material, which may include hard carbon. The electrolyte includes an electrolyte salt and a solvent. The electrolyte salt includes at least one of NaPF₆ and NaClO₄. The solvent includes one or more of ethylene carbonate (EC), dimethyl carbonate (DMC), ethyl methyl carbonate (EMC), diethyl carbonate (DEC), and propylene carbonate (PC). The separator may be a polyolefin separator or a glass fiber separator.

In the embodiments of the present disclosure, the sodium-ion battery includes a positive electrode plate 100, where the positive electrode plate 100 includes: a positive electrode current collector 30, a first positive electrode material layer 10 disposed on at least one surface of the positive electrode current collector 30, and a second positive electrode material layer 20 disposed on the first positive electrode material layer 10. The first positive electrode material layer 10 and the second positive electrode material layer 20 may be supported by the current collector, and the current collector layer may also serve as a carrier for electron collection and conduction in the positive electrode plate 100, thereby realizing the process of converting chemical energy into electrical energy. The first positive electrode material layer 10 includes a first positive electrode material, and the second positive electrode material layer 20 includes a second material, that is, the second positive electrode material is disposed on the first positive electrode material. Since the first positive electrode material includes a tunnel-type oxide and the second positive electrode material includes a P2 and/or O3 type layered oxide, the P2 and/or O3 type layered oxide and the tunnel-type oxide are stacked on at least one surface of the current collector to form the positive electrode plate 100. Both the tunnel-type oxide and the layered oxide may provide sodium ions during charging. Since the sodium content of the layered oxides is relatively high, the provision of the layered oxides may enable the positive electrode plate 100 to have more sodium ions that may be deintercalated.

That is, in the sodium-ion battery provided in the embodiments of the present disclosure, since the positive electrode plate 100 also includes the second positive electrode material layer 20 including the second positive electrode material, when the sodium-ion battery is charged for the first cycle, in addition to the first positive electrode material layer 10, the second positive electrode material layer 20 may also provide additional sodium ions, so that more sodium ions may be deintercalated in the sodium-ion battery, thereby enabling the sodium-ion battery to have a higher discharge capacity, thereby achieving an improvement in the charge and discharge capacity of the sodium-ion battery when the tunnel-type oxide is used as the positive electrode material.

In addition, the present invention also provides a method for producing a positive electrode plate, the method including:
Step 101: providing a positive electrode current collector.

In an embodiment of the present disclosure, the positive electrode current collector may be made of aluminum. Sodium does not react with aluminum, so aluminum may be used to make the positive electrode current collector of the positive electrode plate of the sodium-ion battery, which is low in cost. Specifically, the positive electrode current collector may be aluminum foil.

Step 102: forming a first positive electrode material layer on the positive electrode current collector, where the first positive electrode material layer includes a tunnel-type oxide.

In an embodiment of the present disclosure, a first positive electrode material layer including a tunnel-type oxide is formed on the positive electrode current collector. The tunnel-type oxide may serve as an active material of the first positive electrode material layer to provide sodium ions that may be deintercalated for the sodium-ion battery.

Forming a first positive electrode material layer on the positive electrode current collector may specifically include: preparing a first positive electrode material; coating the first positive electrode material on the positive electrode current collector; and drying the first positive electrode material to form the first positive electrode material layer. That is, the first positive electrode material may be prepared firstly, and then the first positive electrode material is coated on the positive electrode current collector; after drying the first positive electrode material, the first positive electrode material layer may be obtained. Since the first positive electrode material includes a tunnel-type oxide, the first positive electrode material layer may have a tunnel-type oxide.

It should be noted that the first positive electrode material may be mixed with a conductive agent, a binder, etc. to obtain first coating slurry, and the first coating slurry may be coated on the positive electrode current collector. The first coating slurry may be dried to obtain the first positive electrode material layer. This process may be naturally air-dried, or the first coating slurry may be dried in an oven at a temperature range of 80°C to 120°C for a baking time of 10-30 minutes.

In this embodiment, taking the tunnel-type oxide being Na_{0.44}MnO₂ material as an example, preparing a first positive electrode material may include: providing a first mixture formed by Na₂CO₃ and MnCO₃, where the molar ratio of Na to Mn in the first mixture is 0.46; ball-milling the first mixture to obtain a particle mixture; drying the particle mixture to obtain a dried particle mixture; grinding the dried particle mixture to obtain a first powder precursor; calcining the first powder precursor, and obtain Na_{0.44}MnO₂ material after cooling, which is the first positive electrode material. Providing a conductive agent and a binder, and mixing the Na_{0.44}MnO₂ material, the conductive agent, and the binder to obtain a first coating slurry, where the mass ratio of the Na_{0.44}MnO₂ material, the conductive agent, and the binder in the first coating slurry is 8: 1: 1.

A certain amount of Na₂CO₃ and MnCO₃ may be weighed so that the molar ratio of Na to Mn is 0.46, and the weighed Na₂CO₃ and MnCO₃ are mixed to form a first mixture. The first mixture is ball-milled to obtain a particle mixture. After the particle mixture is dried, the dried particle mixture is ground to obtain a first powder precursor. The first powder precursor is then calcined and cooled to obtain Na_{0.44}MnO₂ material. During the ball-milling of the first mixture, alcohol may also be added. The addition of alcohol facilitates uniform mixing of Na₂CO₃ and MnCO₃, and the alcohol is volatile and will not adhere to the surface of the first mixture or the particle mixture.

During the ball-milling of the first mixture, a ball mill may be used at a speed of 300 r/min for 4 hours. After obtaining the particle mixture, it may be placed in a 50°C environment for drying and grinding to obtain the powder precursor. When calcining the first powder precursor, it may be calcined in a muffle furnace at 800°C for 9 hours, and then taken out after cooling.

After Na_{0.44}MnO₂ being prepared, the first coating slurry may be prepared. Specifically, a conductive agent and a binder are provided, and the Na_{0.44}MnO₂ material, the conductive agent, and the binder are mixed to obtain the first coating slurry. The mass ratio of the Na_{0.44}MnO₂ material, the conductive agent, and the binder is 8 : 1 : 1. The conductive agent may be one or more of Acetylene black (ACET), Ketjen Black carbon (CAS), Ketjen Black (KB), carbon nanotubes, and graphene. The binder may be one or more of PolyVinylidene Fluoride (PVDF), Hydroxymethyl cellulose (HMC), and Emulsion-polymerized styrene- butadiene rubber (E-SBR).

It should be noted that in the slurry of the first positive electrode material, the mass ratio of the Na_{0.44}MnO₂ material, the conductive agent, and the binder in the first coating slurry is not limited to 8 : 1 : 1. In the first coating slurry, the mass content percentage of Na_{0.44}MnO₂ may be within the range of 80 to 90 wt%, the mass content percentage of the conductive agent may be within the range of 5 to 10 wt%, and the mass content percentage of the binder may be within the range of 5 to 10 wt%. The specific content may be set according to actual needs and is not specifically limited in the embodiments of the present disclosure. For other tunnel-type oxides, such as Na_{0.4}MnO₂, Na_{0.2}MnO₂, and the like, they may be prepared by simply adjusting the molar ratio of Na to Mn.

Step 103: forming a second positive electrode material layer on the first positive electrode material layer, where the second positive electrode material layer includes a layered metal oxide, where the sodium-ion layered metal oxide includes a P2 and/or O3 type layered oxide.

In an embodiment of the present disclosure, a second positive electrode material layer including a P2 and/or O3 type layered oxide is formed on the first positive electrode material layer. The P2 and/or O3 type layered oxide may serve as an active material in the second positive electrode material layer, providing additional sodium ions that may be deintercalated for the sodium-ion battery, thereby avoiding the problem of a lower charge and discharge capacity of the sodium-ion battery due to fewer sodium ions that may be deintercalated in the first positive electrode material.

Forming a second positive electrode material layer on the first positive electrode material layer may specifically include: preparing a second positive electrode material; coating the second positive electrode material on the first positive electrode material layer; and drying the second positive electrode material to form the second positive electrode material layer. Specifically, the second positive electrode material may be prepared firstly, and then the second positive electrode material is coated onto the first positive electrode material layer, after drying the second positive electrode material layer, the second positive electrode material layer may be obtained. Since the second positive electrode material includes a P2 and/or O3 type layered oxide, the second positive electrode material layer may include layered oxides with high sodium content, so that the second positive electrode material layer may also provide sodium ions to the negative electrode.

It should be noted that when coating the second positive electrode material, the second positive electrode material, the conductive agent and the binder may be mixed to obtain second coating slurry, and the second coating slurry may be coated onto the first positive electrode material. The second coating slurry may be dried to obtain a second positive electrode material layer. This process may be naturally air-dried, or the second coating slurry may be dried in an oven at a temperature range of 80°C to 120°C for a baking time of 10-30 minutes.

In this embodiment, taking the layered oxide being Na_{2/3}Ni_{1/3}Mn_{2/3}O₂ material as an example, preparing a second positive electrode material may specifically include: providing a second mixture formed by Na₂CO₃, NiO and MnO₂, where the molar ratio of Na, Ni and Mn in the second mixture is 2 : 1 : 1; stirring the second mixture to obtain a second powder precursor; sintering the second powder precursor, and obtaining a sodium-ion layered metal oxide material after cooling.

A certain amount of Na₂CO₃, NiO, and MnO₂ may be weighed so that the molar ratio of Na, Ni, and Mn is in the range of 2 : 1 : 1. The weighed Na₂CO₃, NiO, and MnO₂ are mixed to form a second mixture. The second mixture is stirred to obtain a second powder precursor. The second powder precursor is then sintered and cooled to obtain a Na_{2/3}Ni_{1/3}Mn_{2/3}O₂ material. During the ball-milling of the second mixture, alcohol may also be added for ball-milling. The addition of alcohol facilitates uniform mixing of Na₂CO₃ and MnCO₃, and the alcohol is volatile and will not adhere to the surface of the second mixture or the particle mixture.

After obtaining the second mixture, the second mixture may be stirred under vacuum conditions at room temperature, and may be stirred for 3 hours by a stirrer at a speed of 300 r/min to obtain a second powder precursor. When the second powder precursor is sintered after being obtained, in order to facilitate heating of the second powder precursor, the second powder precursor may be first pressed into a sheet, and then the sheet-shaped second powder precursor is sintered. The sintering may be carried out in an air environment at 800°C, and after cooling, the mixture is taken out to obtain the Na_{2/3}Ni₁/₃Mn₂/₃O₂ material.

After preparing Na_{2/3}Ni₁/₃Mn₂/₃O₂, second coating slurry may be prepared. Specifically, a conductive agent and a binder are provided, and Na_{2/3}Ni₁/₃Mn₂/₃O₂, the conductive agent, and the binder are mixed to obtain the second coating slurry. The mass ratio of the sodium-ion layered metal oxide material, the conductive agent, and the binder in the second coating slurry is 8 : 1 : 1. The conductive agent may be one or more of Acetylene black (ACET), Ketjen Black carbon (CAS), Ketjen Black (KB), carbon nanotubes, and graphene. The binder may be one or more of PolyVinylidene Fluoride (PVDF), Hydroxymethyl cellulose (HMC), and Emulsion-polymerized styrene- butadiene rubber (E-SBR).

It should be noted that in the embodiments of the present disclosure, only the preparation method of the second positive electrode material being Na_{2/3}Ni₁/₃Mn₂/₃O₂ is provided. For the preparation of other materials, reference may be made to Na_{2/3}Ni₁/₃Mn₂/₃O₂. When the layered oxide is other materials, different materials may be mixed to obtain a second mixture. The molar ratio of Na to other transition metals in the second mixture may be set according to the specific molecular formula. For example, for NaNi_{1/3}Fe_{1/3}Mn_{1/3}O₂ material, when weighing the materials to obtain the second mixture, the molar ratio of Na, Ni, Fe, and Mn in the second mixture may be 3 : 1 : 1 : 1. For other materials, the embodiments of the present disclosure are not listed here one by one.

Where, in the second coating slurry, the mass ratio of Na_{2/3}Ni₁/₃Mn₂/₃O₂ material, conductive agent and binder in the second coating slurry may not be limited to 8 : 1 : 1. In the second coating slurry, the mass content percentage of Na_{2/3}Ni₁/₃Mn₂/₃O₂ may be within the range of 80 to 90wt%, the mass content percentage of the conductive agent may be within the range of 5 to 10wt%, and the mass content percentage of the binder may be within the range of 5 to 10wt%. The specific content may be set according to actual needs, and the embodiments of the present disclosure do not make specific limitations here.

It should also be noted that the above preparation process is to prepare Na_{0.44}MnO₂ material and Na_{2/3}Ni₁/₃Mn₂/₃O₂ material by a high-temperature solid-phase method, which is one of the multiple preparation methods of Na_{0.44}MnO₂ material and Na_{2/3}Ni₁/₃Mn₂/₃O₂ material. They may also be prepared by other methods. For example, Na_{0.44}MnO₂ material may also be prepared by a molten salt method or a hydrothermal method. For various preparation methods, they are not listed one by one here in the embodiments of this application.

When making the negative electrode plate, the hard carbon negative electrode material, the conductive agent and the binder may be evenly mixed to prepare negative electrode plate slurry, where the mass content percentage of the hard carbon negative electrode material may be 80 to 90wt%, the mass content percentage of the conductive agent may be 5 to 10wt%, and the mass content percentage of the binder may be 5 to 10wt%; and copper foil may be used as the negative electrode current collector, the negative electrode plate slurry is coated on the negative electrode current collector, and the negative electrode plate is obtained by drying at 80°C for 60 minutes.

In the embodiments of the present disclosure, the first coating slurry and the second coating slurry are applied in separate layers to obtain the positive electrode plate 100, avoiding the method of applying the first coating slurry and the second coating slurry after mixing, and the stability of the obtained positive electrode plate 100 is also better. Due to the different physical properties of tunnel-type oxides and layered oxides, problems may occur in the stirring process after mixing, such as slurry sedimentation, etc. The different compaction densities of the two will also affect the stability of the electrode plate during roller pressing. In addition, the crystal phases of the two materials are also different. It is difficult for the electrode plate prepared after mixed coating to maintain the stability of their respective structures during charging and discharging. Applying the first coating slurry and the second coating slurry in separate layers may avoid the above problems.

In order to make the object, technical solutions and beneficial effects of this application more clear, the present disclosure is further described below in conjunction with embodiments. It should be understood that these embodiments are only used to illustrate this application and are not used to limit the scope of this application.

### Embodiment 1

### (1) Preparation of positive electrode materials:

A first mixture formed by Na₂CO₃ and MnCO₃ is provided, where the molar ratio of Na to Mn in the first mixture is 0.46; the first mixture is ball-milled to obtain a particle mixture; the particle mixture is dried to obtain a dried particle mixture; the dried particle mixture is ground to obtain a first powder precursor; the first powder precursor is calcined, and after cooling, a Na_{0.44}MnO₂ material is obtained, which is the first positive electrode material.

A second mixture formed by Na₂CO₃, Ni(CH₃COO)₂, and C₄H₆MnO₄ is provided, where the molar ratio of Na, Ni, and Mn in the second mixture is 2 : 1 : 2. The second mixture is ball-milled to obtain a particle mixture. The second mixture is stirred to obtain a second powder precursor. The second powder precursor is sintered, and after cooling, a layered metal oxide Na_{2/3}Ni₁/₃Mn₂/₃O₂ is obtained, thereby obtaining a second positive electrode material.

### (2) Preparation of positive electrode:

Aluminum sheet is taken as positive electrode current collector;
A conductive agent and a binder are provided, and a Na_{0.44}MnO₂ material, the conductive agent and the binder are mixed to obtain first coating slurry, where the mass ratio of the Na_{0.44}MnO₂ material, the conductive agent and the binder in the first coating slurry is 8 : 1 : 1. The first coating slurry is coated on an aluminum sheet and dried at 80°C for 15 minutes to obtain a first positive electrode material layer, where the thickness of the first positive electrode material layer is 50 µm.

A conductive agent and a binder are provided, and a Na_{2/3}Ni_{1/3}Mn_{2/3}O₂ material, the conductive agent, and the binder are mixed to obtain second coating slurry. The mass ratio of the Na_{2/3}Ni_{1/3}Mn_{2/3}O₂ material, the conductive agent, and the binder in the second coating slurry is 8 : 1 : 1. The second coating slurry is coated onto the first positive electrode material layer and dried at 120°C for 30 minutes to obtain a positive electrode plate coated with the second positive electrode material layer. The thickness of the second positive electrode material layer is 2.5 µm.

### (3) Preparation of negative electrode plate:

Copper foil is taken as the negative electrode current collector,
A negative electrode slurry is prepared by mixing a hard carbon material, a conductive agent and a binder; where the mass ratio of the hard carbon material, the conductive agent and the binder in the negative electrode slurry is 8 : 1 : 1;

The negative electrode plate may be obtained by coating the slurry on copper foil and drying it at 80°C for 60 minutes.

### (4) Assembling of sodium-ion batteries:

The separator, negative electrode plate and positive electrode plate are wound up in sequence, rolled into a bare roll core by a winding machine, and then the processes of hot pressing, tab welding, shell packaging, electrolyte injection, and formation and sorting are performed to prepare sodium ion square-shaped batteries.

The electrolyte includes an electrolyte salt and a solvent, where the electrolyte salt is NaPF₆ and the solvent is Ethylene Carbonate (EC); and the separator is a glass fiber separator.

The difference between Embodiments 2 to 7 and Embodiment 1 is that the thicknesses of the first positive electrode material layer and/or the second positive electrode material layer are different, as shown in Table 1.

The difference between Embodiments 8 to 11 and Embodiment 1 is that the particle sizes Dv50 of the second positive electrode material are different, as shown in Table 1.

The difference between Embodiments 12 to 15 and Embodiment 1 is that the compaction densities of the positive electrode plates are different, as shown in Table 1.

The difference between Embodiments 16 to 21 and Embodiment 1 is that the first positive electrode materials or the second positive electrode materials are different, as shown in Table 1.

The difference between Comparative Example 1 and Embodiment 1 is that the second positive electrode material layer is not provided.

The difference between Comparative Example 2 and Embodiment 1 is that in Comparative Example 2, Na_{0.44}MnO₂, Na_{2/3}Ni_{1/3}Mn_{2/3}O₂, a conductive agent and a binder are directly mixed to obtain a coating slurry, which is then coated on an aluminum sheet and dried at 80°C for 15 min to obtain a positive electrode material layer with a thickness of 52.5 µm.

**Table 1**

| | First positive electrode material | Thickness H₁ of first positive electrode material layer | Second positive electrode material | Dv50 | Thickness H₂ of second positive electrode material layer | Compaction density of electrode plate | H₂/H₁ |
|---|---|---|---|---|---|---|---|
| Embodiment 1 | Na_{0.44}MnO₂ | 50 | Na_{2/3}Ni_{1/3}Mn_{2/3}O₂ | 3 | 2.5 | 2 | 0.05 |
| Embodiment 2 | Na_{0.44}MnO₂ | 50 | Na_{2/3}Ni_{1/3}Mn_{2/3}O₂ | 3 | 5 | 2 | 0.1 |
| Embodiment 3 | Na_{0.44}MnO₂ | 75 | Na_{2/3}Ni_{1/3}Mn_{2/3}O₂ | 3 | 7.5 | 2 | 0.1 |
| Embodiment 4 | Na_{0.44}MnO₂ | 100 | Na_{2/3}Ni_{1/3}Mn_{2/3}O₂ | 3 | 10 | 2 | 0.1 |
| Embodiment 5 | Na_{0.44}MnO₂ | 100 | Na_{2/3}Ni_{1/3}Mn_{2/3}O₂ | 3 | 15 | 2 | 0.15 |
| Embodiment 6 | Na_{0.44}MnO₂ | 100 | Na_{2/3}Ni_{1/3}Mn_{2/3}O₂ | 3 | 20 | 2 | 0.2 |
| Embodiment 7 | Na_{0.44}MnO₂ | 50 | Na_{2/3}Ni_{1/3}Mn_{2/3}O₂ | 3 | 10 | 2 | 0.2 |
| Embodiment 8 | Na_{0.44}MnO₂ | 75 | Na_{2/3}Ni_{1/3}Mn_{2/3}O₂ | 6 | 7.5 | 2 | 0.1 |
| Embodiment 9 | Na_{0.44}MnO₂ | 75 | Na_{2/3}Ni_{1/3}Mn_{2/3}O₂ | 8 | 7.5 | 2 | 0.1 |
| Embodiment 10 | Na_{0.44}MnO₂ | 75 | Na_{2/3}Ni_{1/3}Mn_{2/3}O₂ | 10 | 7.5 | 2 | 0.1 |
| Embodiment 11 | Na_{0.44}MnO₂ | 75 | Na_{2/3}Ni_{1/3}Mn_{2/3}O₂ | 15 | 7.5 | 2 | 0.1 |
| Embodiment 12 | Na_{0.44}MnO₂ | 75 | Na_{2/3}Ni_{1/3}Mn_{2/3}O₂ | 8 | 7.5 | 2.3 | 0.1 |
| Embodiment 13 | Na_{0.44}MnO₂ | 75 | Na_{2/3}Ni_{1/3}Mn_{2/3}O₂ | 8 | 7.5 | 2.6 | 0.1 |
| Embodiment 14 | Na_{0.44}MnO₂ | 75 | Na_{2/3}Ni_{1/3}Mn_{2/3}O₂ | 8 | 7.5 | 2.8 | 0.1 |
| Embodiment 15 | Na_{0.44}MnO₂ | 75 | Na_{2/3}Ni_{1/3}Mn_{2/3}O₂ | 8 | 7.5 | 3 | 0.1 |
| Embodiment 16 | Na_{0.2}MnO₂ | 75 | Na_{2/3}Ni_{1/3}Mn_{2/3}O₂ | 8 | 7.5 | 2.6 | 0.1 |
| Embodiment 17 | Na_{0.4}MnO₂ | 75 | Na_{2/3}Ni_{1/3}Mn_{2/3}O₂ | 8 | 7.5 | 2.6 | 0.1 |
| Embodiment 18 | Na_{0.44}MnO₂ | 75 | Na_{0.67}Ni_{0.33}Mn_{0.57}Ti_{0.1} O₂ | 8 | 7.5 | 2.6 | 0.1 |
| Embodiment 19 | Na_{0.44}MnO₂ | 75 | Na_{0.76}Ni_{0.33}Fe_{0.1}Mn_{0.5 7}O₂ | 8 | 7.5 | 2.6 | 0.1 |
| Embodiment 20 | Na_{0.44}MnO₂ | 75 | Na_{0.76}Ni_{0.33}Fe_{0.1}Mn_{0.5} Ti_{0.07}O₂ | 8 | 7.5 | 2.6 | 0.1 |
| Embodiment 21 | Na_{0.44}MnO₂ | 75 | NaNi_{1/3}Fe_{1/3}Mn_{1/3}O₂ | 8 | 7.5 | 2.6 | 0.1 |
| Comparative Example 1 | Na_{0.44}MnO₂ | 50 | / | / | / | 2 | / |

### Performance Testing

First-cycle discharge capacity per gram:
1) Weighing the mass M of the sodium-ion battery;
2) Placing the sodium-ion battery in a room temperature environment (25°C ± 1°C) and fully charging the sodium-ion battery at a preset rate;
3) After sufficient standing at room temperature, discharging the battery at a preset discharge rate to the cut-off voltage V of the sodium-ion battery;
4) Recording the capacity (energy) released by the sodium-ion battery during this process, recorded as E₁;
5) Calculating the first-cycle discharge capacity per gram of the sodium-ion battery = E₁/M.

Where, the discharge rate indicates the size of the discharge current. The charge and discharge rate (C) = discharge current (mA)/rated capacity (mAh). For example, if a battery with a rated capacity of 1000 mAh is charged and discharged at a current of 100 mA, the charge and discharge rate is 0.1C.

In the embodiments of the present disclosure, the first-cycle discharge capacity per gram of the sodium-ion battery may be tested at discharge rates of 0.33C, 1C, and 5C, respectively. That is, in the embodiments of the present disclosure, when testing the first-cycle discharge capacity per gram, the tests are performed at preset discharge rates of 0.1C, 1C, and 5C, respectively. Furthermore, in a single measurement of first-cycle discharge capacity per gram, the preset rate used during charging is the same as the preset rate used during discharge.

### 1C cycle performance/circle:

1) Charging sodium-ion batteries at room temperature;
2) After charging is completed, standing the battery at room temperature and then discharging at a 1C discharge rate to the cut-off voltage V of the sodium-ion battery;
3) Recording the capacity (energy) released by the sodium-ion battery during this process, recorded as E₂;
4) Repeating steps 1 to 3 above and count;
5) When E2 is lower than 80% of the initial discharge capacity for two consecutive times, the number of charge and discharge times is determined based on the count at this time to obtain the 1C cycle performance.

The above performance test method was used to perform performance tests on the batteries of each example, and the obtained data are shown in Table 2 below.

According to the data of the following table, it may be seen that when the second positive electrode material layer 20 is disposed on the first positive electrode material layer 10, the discharge capacity will be improved compared with that the second positive electrode material layer 20 is not provided, and for the same layered oxide, the thickness of the second positive electrode material layer affects the first cycle discharge capacity per gram.

**Table 2**

| | 0.1C first cycle discharge capacity per gram (mAh/g) | 1C first cycle discharge capacity per gram (mAh/g) | 5C first cycle discharge capacity per gram (mAh/g) | 1C cycle performance (80% SOC)/cycle |
|---|---|---|---|---|
| Embodiment 1 | 108 | 103 | 70.5 | 325 |
| Embodiment 2 | 112 | 105 | 74 | 318 |
| Embodiment 3 | 116 | 108 | 80 | 340 |
| Embodiment 4 | 105 | 90 | 68 | 328 |
| Embodiment 5 | 103 | 95 | 72 | 302 |
| Embodiment 6 | 98.5 | 82 | 60 | 278 |
| Embodiment 7 | 110 | 106 | 67 | 295 |
| Embodiment 8 | 110 | 105 | 70 | 328 |
| Embodiment 9 | 107 | 101 | 68 | 360 |
| Embodiment 10 | 106 | 89 | 59 | 302 |
| Embodiment 11 | 102 | 83 | 52 | 278 |
| Embodiment 12 | 116 | 108 | 82 | 379 |
| Embodiment 13 | 121 | 112 | 90 | 486 |
| Embodiment 14 | 112 | 105 | 83 | 415 |
| Embodiment 15 | 107 | 98 | 78 | 325 |
| Embodiment 16 | 108 | 92 | 73 | 390 |
| Embodiment 17 | 118 | 109 | 81 | 465 |
| Embodiment 18 | 120 | 110 | 89 | 476 |
| Embodiment 19 | 122 | 108.5 | 86 | 456 |
| Embodiment 20 | 119 | 104 | 82 | 469 |
| Embodiment 21 | 120.5 | 103.3 | 80.5 | 391 |
| Comparative Example 1 | 88 | 79.2 | 57.2 | 345 |
| Comparative Example 2 | 105 | 97 | 80 | 268 |

It should be noted that the various embodiments in this specification are described in a progressive manner, and each example focuses on the differences from other embodiments. The same and similar parts between the various embodiments may be referenced to each other.

Although alternative embodiments of the present invention have been described, those skilled in the art may make additional changes and modifications to these embodiments once they become aware of the basic inventive concept. Therefore, the appended claims are intended to be interpreted as including alternative embodiments and all changes and modifications that fall within the scope of the present invention.

The above is a detailed introduction to the technical solution provided by the present disclosure. Specific embodiments are used herein to illustrate the principles and implementation methods of the present disclosure. At the same time, for those skilled in the art, according to the principles and implementation methods of the present disclosure, there may be changes in the specific implementation methods and application scope. In summary, the contents of this specification should not be understood as limiting the present disclosure.

The terms "one example" "example" or "one or more embodiments" herein mean that a particular feature, structure, or characteristic described in connection with the example is included in at least one example of the present disclosure. Furthermore, please note that instances of the phrase "in one example" do not necessarily all refer to the same example.

In the description provided herein, a large number of specific details are described. However, it is understood that the embodiments of the present disclosure may be practiced without these specific details. In some instances, well-known methods, structures, and techniques are not shown in detail so as not to obscure the understanding of this description.

Finally, it should be noted that the above embodiments are only used to illustrate the technical solutions of the present disclosure, rather than to limit them. Although the present disclosure has been described in detail with reference to the aforementioned embodiments, those skilled in the art should understand that they may still modify the technical solutions described in the above embodiments, or make equivalent replacements for some of the technical features therein. However, these modifications or replacements do not deviate the essence of the corresponding technical solutions from the spirit and scope of the technical solutions of the embodiments of the present disclosure.

## Claims

1. A sodium-ion battery, comprising a positive electrode plate, the positive electrode plate comprising: a positive electrode current collector, a first positive electrode material layer disposed on at least one surface of the positive electrode current collector, and a second positive electrode material layer disposed on the first positive electrode material layer;
the first positive electrode material layer comprises a first positive electrode material, and the first positive electrode material comprises a tunnel-type oxide;
the second positive electrode material layer comprises a second positive electrode material, and the second positive electrode material comprises a P2 and/or O3 type layered oxide.

2. The sodium-ion battery of claim 1, wherein the molecular formula of the layered oxide comprises NaₓTMO₂, wherein TM comprises at least one of Ni, Mn, Fe, Ti, Co, Cu, and Zn, and the x satisfies: 0.6< x <1.

3. The sodium-ion battery of claim 1, wherein the thickness of the first positive electrode material layer is H₁, the thickness of the second positive electrode material layer is H₂, and the H₁ and H₂ satisfy: 0.05 ≤ H₂/H₁ ≤ 0.2.

4. The sodium-ion battery of claim 3, wherein the H₁ satisfies: 50 µm ≤ H₁ ≤ 100 µm.

5. The sodium-ion battery of claim 3, wherein the H₂ satisfies: 2.5 µm ≤ H₂ ≤ 20 µm.

6. The sodium-ion battery of claim 1, wherein the tunnel-type oxide comprises sodium element and manganese element, and the molar ratio of the sodium element to the manganese element is 0.2 to 0.44.

7. The sodium-ion battery of claim 1, wherein the tunnel-type oxide comprises at least one of Na_{0.2}MnO₂, Na_{0.40}MnO₂, and Na_{0.44}MnO₂.

8. The sodium-ion battery of claim 1, wherein the compaction density of the positive electrode plate is K, and the K satisfies: 2 mg/cm³≤K≤3 mg/cm³.

9. The sodium-ion battery of claim 1, wherein the volume median particle size of the layered oxide is Dv50, and the Dv50 satisfies: 3 µm≤Dv50≤15 µm.

10. An electric device, comprising the sodium-ion battery of any one of claims 1 to 9.
